# EUROPEAN PATENT SPECIFICATION

(11) **EP 1 624 200 B1**
(45) Date of publication and mention of the grant of the patent: **03.01.2007**
(21) Application number: 04018661.1
(22) Date of filing: 06.08.2004
(51) Int. Cl.: F16B 17/00, F16B 5/07, B23P 19/04, B64C 3/26

(54) **A device and a method for releasably holding two articles together**
Vorrichtung und Verfahren zum lösbaren Zusammenhalten von zwei Teilen
Dispositif et méthode pour tenir deux pièces ensemble de manière détachable

(43) Date of publication of application: 08.02.2006
(73) Proprietor: SAAB AB, 581 88 Linköping (SE)
(72) Inventor: Cardell, Per-Erik, 589 33 Linköping (SE)
(74) Representative: Holmberg, Magnus

(56) References cited:
- EP-A- 0 593 127
- US-A- 4 892 435

## Description

### TECHNICAL FIELD OF THE INVENTION AND PRIOR ART

The present invention relates to a device for releasably holding two articles together in a mutually fixed position as well as a method according to the preambles of claims 1 and 13 respectively (see, for example, US-4, 892, 435-A).

The articles may be any type of articles to be held together in a mutually fixed position with a high accuracy most often for being permanently secured to each other in this position. However, it is also possible that the articles are only held together in said position for being treated in any way, such as through drilling, punching, broaching, sawing or the like in this position.

Such a device and method are for instance of great interest and used for holding two articles together in a mutually fixed position when assembling such articles to form an airplane fuselage, and this particular field of use of the present invention will hereinafter be discussed for illuminating the invention and the problems to be solved thereby without for that sake limiting the invention to this field of use.

Very complicated and by that costly jigs are today used for assembling each larger article in an airplane fuselage. These jigs are controlling the position of each such article. The articles to be held together in a mutually fixed position are to be mounted in the jigs through a number of securing elements, inserts and connecting means. These jigs are then brought to move the articles together and hold them in a mutually fixed position. While held in this position the articles are machined through drilling, broaching and the like, whereupon they are removed from the jigs for intermediate burring, washing and application of sealing means. The articles are after that once again mounted in the jigs and brought to said mutually fixed position for being permanently secured to each other by riveting. Such removal for intermediate burring, washing and application of sealing means is necessary, since drillings and the like is introduced in spaces between the two articles when they are machined, and such particles have to be removed before permanently securing the articles to each other.

The costs for such complicated jigs, the costs for maintenance of the equipment and calibration of the jigs as well as the way to proceed for assembling the articles while using these jigs are comparatively high.

### SUMMARY OF THE INVENTION

The object of the present invention is to provide a device and a method at least partially solving the problems mentioned above.

This object is according to the invention obtained by providing a device and a method according to claims 1 and 13.

By using machine articles, i.e. articles formed by machining of one single material piece, normally primarily through milling, as said articles said lug portions with openings and the opening in the first article may be very exactly applied, so that it is possible to hold the articles together in a mutually fixed position very exactly and tightly by using said tool. This results in a number of advantages. Only very simple and by that less costly jigs are necessary for keeping the articles in place when assembling them. The number of inserts, connecting means and fastening elements is reduced. The time for assembling in jigs is substantially reduced, especially since the machine articles may be held that tightly in said mutually fixed position that no drillings or the like will enter any space between the articles, since such spaces are not there, and there is accordingly no need to remove the articles from the jigs after drilling and the like for burring, washing and application of sealing means, but the articles may be held together in a mutually fixed position throughout the assembling procedure.

According to an embodiment of the invention only one of said two lug portions having delimiting surfaces to be moved into alignment has an opening surroundingly delimited by lug portion walls and the opening of the other lug portion is laterally opened in the direction away from said first article in said fixed position and by that groove-like. It is often easier to obtain such a groove-like opening in a lug portion than an opening having surrounding delimiting walls, and it has been found out that one of the openings may be of that type, which will save time and costs.

According to another embodiment of the invention said first lug portion has a said groove-like opening. This is mostly preferred, since it is mostly easier to obtain an opening having surrounding delimiting walls in a lug portion projecting from an article for being able to be introduced through an opening in the other article as is the case for said second lug portion. Said second lug portion is namely normally located at an edge of an article in the form of a plate-like member, whereas the first lug portion is normally located close to an opening through the large side of such a plate-like member.

According to another embodiment of the invention said tool has a wedge-like character so as to by wedge action obtain said pressing into alignment of said delimiting surfaces to each other in said fixed position. By using a wedge action in combination with said lug portions of the two machine articles the machine articles may be held with a high accuracy and very tightly in a mutually fixed position.

According to another embodiment of the invention the tool has a wedge-shaped part adapted to have the most narrow end thereof firstly introduced through said two openings of adjacent lug portions, and the tool comprises means for engagement with the most narrow end of the wedge-shaped part for applying a force thereon for pressing this part in the direction of said introduction. This results in a possibility to very exactly press said lug portions into an exact alignment of said defining surfaces thereof for exactly define said fixed position with respect to two dimensions.

According to another embodiment of the invention the tool further comprises a member to be engaged with a thicker end of the wedge-shaped part not possible to be brought through the openings of the lug portions so as to apply forces on the wedge-shaped part in the opposite direction to the direction of introduction and by that press said surrounding surfaces of the two lug portions to bear against each other. This results in a very exact definition of said fixed position with respect to said third dimension.

Said engagements are preferably obtained by threaded bores in the wedge-shaped part and threaded male members, such as screws, tightened against spacers arranged on the respective lug portion.

According to another embodiment of the invention the tool has a wedge-shaped part to be introduced through the two openings of two adjacent lug portions in the direction of the narrowest end thereof, and the wedge-shaped part has a substantially rectangular cross-section as seen in the direction of the introduction intended. A wedge-shaped part of this design allows an accurate definition of the fixed position, and this is especially the case when two adjacent sides of the wedge-shaped part converges towards the respective opposite side in the direction towards the most narrow end of said part, while the other adjacent sides thereof extends substantially in parallel with said direction, and two adjacent said sides delimiting surfaces of each opening in said lug portions are correspondingly inclined for tightly bearing against the two sides first mentioned of the wedge-shaped part. In the case of a groove-like opening in one of the lug portions one of said two other sides of the wedge-shaped part has to co-operate with the "bottom" of said groove.

According to another embodiment of the invention the device has means adapted to fix the two articles with respect to each other on a location at a distance from said tool for preventing the articles held together to rotate about said tool, and this fixing means may then comprise a further said tool adapted to co-operate in the same way as the tool first mentioned with lug portions and openings of the articles on said location. However, in such a case said further tool may be slightly simplified with respect to the tool first mentioned, since it should mostly only have to fix the two articles with respect to each other in one or two dimensions.

The features and the advantages of the method for releasably securing two articles in a mutually fixed position to each other according to the invention appear from the discussion above.

The invention also relates to a method for permanently securing at least two articles to each other, in which the articles are brought into a mutually fixed position and are while holding them in this position permanently secured to each other according to the corresponding appended claim. Also the features and advantages thereof appear from the discussion above of the device according to the invention.

Further advantages as well as advantageous features of the invention will appear from the following description and the other dependent claims.

### BRIEF DESCRIPTION OF THE DRAWINGS

With reference to the appended drawings, below follows a specific description of an embodiment of the invention cited as an example.

In the drawings:
- Fig 1: is a perspective view of a part of a machine article in the form of a rib for an airplane fuselage with an opening and a lug portion with opening and bearing surfaces of a device according to the present invention,
- Fig 2: is a perspective view of a part of a wall to be placed between and secured to such ribs and which is provided with a lug portion with opening of the device according to the invention,
- Fig 3: is an exploded view of a tool being a part of a device according to the invention,
- Fig 4: is a front view of a wedge-shaped part of the tool shown in fig 3,
- Fig 5: is a view illustrating the procedure of securing the rib of fig 1 to the wall of fig 2 in accordance with the present invention, and
- Fig 6: is a perspective view illustrating a rear rib of an air-plane fuselage according to fig 1 held in a fixed position with respect to a wall according to fig 2 connecting it to another rib.

### DETAILED DESCRIPTION OF AN EMBODIMENT OF THE INVENTION

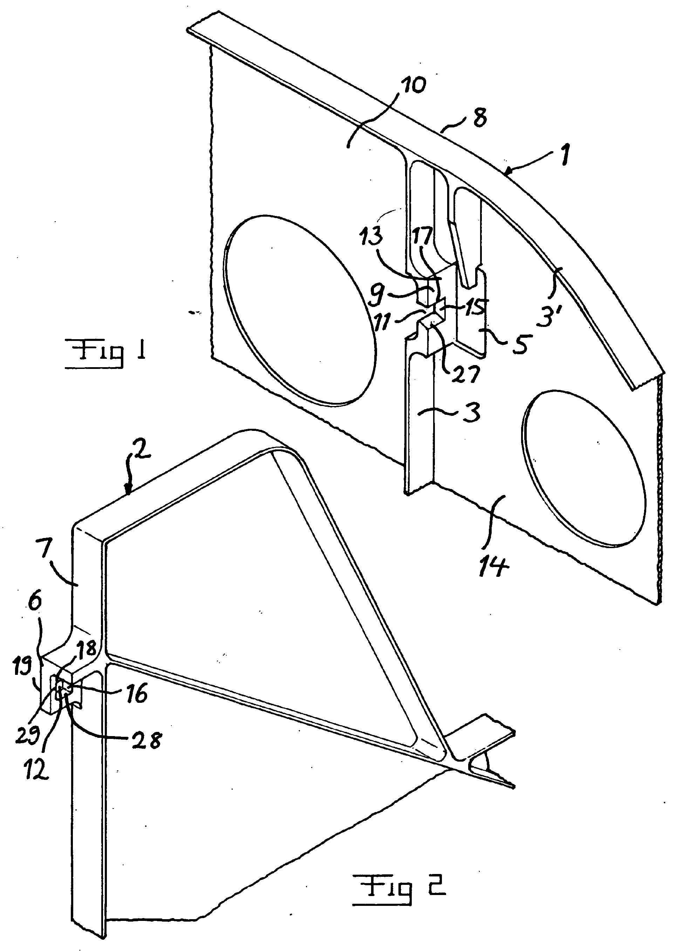

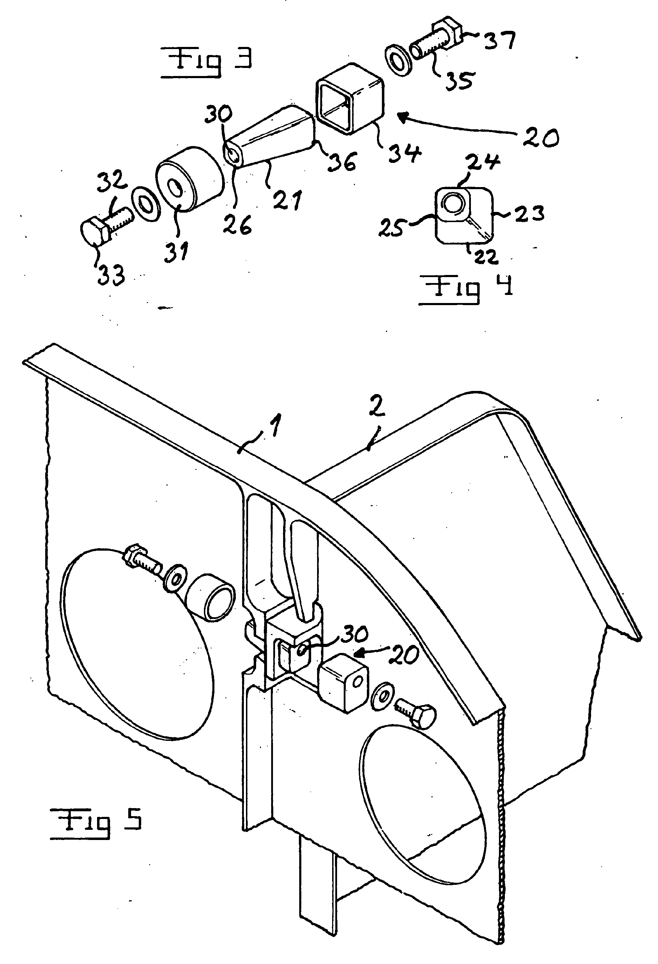

Fig 1 shows a part of a rear rib 1 of an airplane fuselage in the form of a first machine article to be secured to another, second machine article 2 in the form of an intermediate wall shown in fig 2. The different members, such as reinforcing flanges 3, 3' and a lug portion 9, have been obtained from a single material piece through machining, here milling. This results in very small tolerances of the dimensions of these members.

A device for releasably holding the two machine articles 1, 2 together in a mutually fixed position comprises a first opening 5 in the first machine article 1 through which a second lug portion 6 projecting from an end surface 7 of the second article 2 is designed to be moved from a first side 8 of the first article, so that this end surface 7 bears tightly against said first side 8. The first article has a first projecting lug portion 9 arranged on the opposite second side 10 of the first article adjacent to said first opening 5.

The two lug portions have an opening 11, 12 each passing therethrough transversely to said first opening 5 when the second lug portion 6 is introduced through this opening. The opening 12 in the second lug portion is surroundingly delimited by lug portion walls, whereas the opening 11 of the first lug portion 9 is laterally opened in the direction away from the first article and by that groove-like. It is necessary that one of the two openings has surroundingly delimiting walls, and it is easier to accomplish this in the lug portion on the end surface than the lug portion arranged on a large surface of an article. Both lug portion openings may of course have surroundingly delimiting walls when desired.

The two lug portions are arranged to be located with their openings at least partially overlapping when the second lug portion 6 is introduced through said first opening 5. Furthermore, the respective lug portion opening is designed to have at least two surfaces defining it in alignment with corresponding surfaces defining the lug portion opening of the adjacent lug portion for defining said fixed position with respect to two dimensions, namely in a plane parallel to surfaces 13 surrounding the opening 11 of the first lug portion 9 and here being perpendicular to the large surface 14 of the first article. Said surfaces to be in alignment are the bottom surface 15 of the opening 11 in the first lug portion 9, the corresponding surface 16 in the second lug portion 6 and one surface 17, 18 of each of these openings perpendicular thereto, in this case the upper surfaces as seen in fig 1 and 2.

The definition of said fixed position with respect to a third dimension is obtained by tightly bearing of the surfaces 13 surrounding the opening 11 against surfaces 19 surrounding the opening 12 of the second lug portion when this is introduced through the first opening 5.

The device also comprises a tool 20 illustrated in fig 3 and 4 adapted to hold the articles together in said mutually fixed position. How this is obtained is illustrated in fig 5. The tool has a wedge-shaped part 21 adapted to be introduced through the openings 11, 12 of adjacent lug portions 6, 9 and press them into alignment of said defining surfaces 15, 16 and 17, 18 and said surrounding surfaces 13, 19 to bear under pretension against each other for holding the articles in a mutually fixed position. The wedge-shaped part 21 has a rectangular cross-section, in this case a square cross-section, with two adjacent sides 22, 23 converging towards the respective opposite side 24, 25 in the direction towards the narrowest end 26 of this part 21. The other adjacent sides 24, 25 extend substantially in parallel with said direction. Corresponding surfaces of the openings in the lug portions are correspondingly inclined, which in this case is the lower surface 27 of the first lug portion 9 and the lower surface 28 and the surface 29 opposite to the surface 16 of the second lug portion 6.

The wedge-shaped part 21 has a threaded bore 30 extending therethrough. A first spacer 31 in the form of a sleeve is adapted to be applied upon the first lug portion around said most narrow end 26 of the wedge-shaped part when this is introduced through the lug portion openings and to be tightened against this lug portion by tightening a head 33 of a screw 32 engaging the bore 30 thereagainst. By tightening said screw 32 the wedge-shaped part is forced further through the openings 11, 12 of the lug portions for pressing the lug portions to a very exact alignment of said opening surfaces thereof and by that definition of said mutually fixed position in two dimensions.

The tool also comprises a second spacer 34 also having a sleeve-like character to be applied on the second lug portion and tightened thereagainst by a screw 35 engaging the threaded bore 30 from the thicker end 36 of the wedge-shaped part 21 with the head 37 of the screw against the spacer. By tightening the screw 35 the wedge-shaped part will be influenced in the direction out of the openings 11, 12 of the lug portions and the surrounding surfaces 13, 19 of these openings will by that be pressed against each other for defining said fixed position in a third dimension perpendicular to the first two dimensions.

The fixing of the two articles 1, 2 in said mutually fixed position will take place in the following way. The second lug portion 6 is firstly introduced through the first opening 5 of the first article 1, so that the openings 11, 12 of the lug portions will overlap. The wedge-shaped part 21 is then introduced with the narrowest end 26 first through the two openings of the lug portions as shown in fig 5. The first spacer 31 is after that applied onto the first lug portion and the screw 32 introduced therethrough and through the bore 30 and tightened so as to pull the wedge-shaped part 21 as much as possible through said openings of the lug portions for defining said fixed position into dimensions perpendicular to the direction of introduction of the wedge-shaped part. The second spacer 34 is after that applied on the second lug portion and the screw 35 is introduced therethrough and through the bore 30 and tightened for pressing the surfaces 13 and 19 of the lug portions against each other for defining said fixed position in a third dimension corresponding to the direction of said introduction.

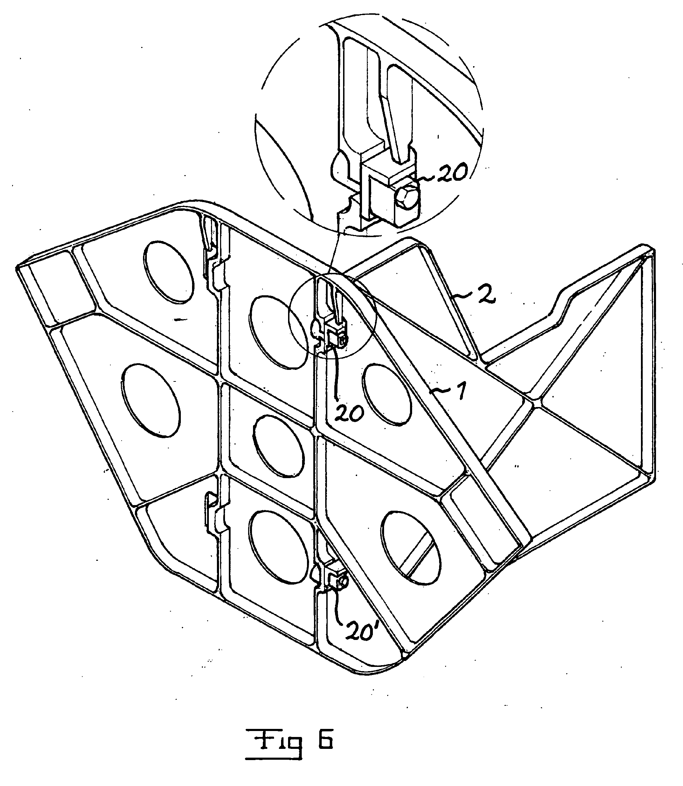

It is shown in fig 6 how the device also comprises means adapted to fix the two articles with respect to each other on a location at a distance from said tool, and this means is in this case a further such tool 20'. This tool 20' has only to fix the articles in two dimensions, namely in the direction of said introduction of the wedge-shaped part and in the direction of introduction of the second lug portion in the first opening of the first article. This means that the articles are prevented from rotating about the first tool 20.

A number of such articles may in this way be mutually fixed and then in said fixed state be subjected to for instance drilling or broaching, application of sealing means and the like. The articles may then, still held in this state, be permanently secured to each other through for example riveting. Said tools 20, 20' will after that be removed for being used when fixing other articles to each other.

The invention is not restricted to the embodiment shown in the figures and described above.

The wedge-shaped part may for instance have another cross-section than that shown and the surfaces of the lug portion openings to be aligned be otherwise directed than shown.

The inclined surfaces of the lug portion openings may be inclined in the other direction and the wedge-shaped part be introduced firstly through the first lug portion and then through the second lug portion. Thus, the first spacer will then bear against the second lug portion and the second against the first.

## Claims

1. A system comprising two articles and a device for releasably holding the two articles together in a mutually fixed position, wherein the articles are machine articles, a first (1) of said articles is provided with at least one first opening (5), the other second article (2) is provided with at least a second projecting lug portion (6) designed to be moved through said opening in the first article from a first side (8) thereof, **characterized in that** at least a first projecting lug portion (9) is arranged on the opposite second side (10) of the first article adjacent to said opening, that the two lug portions have an opening (11, 12) each passing therethrough transversely to the first opening in the first article when said second lug portion (6) is introduced through this opening, that at least one of the lug portion openings is surroundingly delimited by lug portion walls, that the lug portions (6, 9) are arranged to be located with their openings (11, 12) at least partially overlapping when the second lug portion is introduced through said first opening, that the respective lug portion opening is designed to have at least two surfaces (15, 17) defining it in alignment with corresponding surfaces (16, 18) defining the lug portion opening of the adjacent lug portion for defining said fixed position with respect to two dimensions and the first lug portion has surfaces (13) surrounding said opening adapted to define said fixed position with respect to a third dimension by bearing against corresponding surfaces (19) of the second lug portion, and that it further comprises a tool (20) adapted to be introduced through the openings of adjacent lug portions and press them into alignment of said defining surfaces and said surrounding surfaces to bear under pretension against each other for holding the articles in a mutually fixed position.

2. A device according to claim 1, **characterized in that** only one (6) of said two lug portions having delimiting surfaces to be moved into alignment has an opening surroundingly delimited by lug portion walls and the opening of the other lug portion (9) is laterally opened in the direction away from said first article in said fixed position and by that groove-like.

3. A device according to claim 2, **characterized in that** said first lug portion (9) has a said groove-like opening (11).

4. A device according to any of the preceding claims, **characterized in that** said tool (20) has a wedge-like character so as to through wedge action obtain said pressing into alignment of said delimiting surfaces (15-18) to each other in said fixed position.

5. A device according to claim 4, **characterized in that** the tool (20) has an wedge-shaped part (21) adapted to have the most narrow end (26) thereof firstly introduced through said two openings of adjacent lug portions, and that the tool comprises means (30-32) for engagement with the most narrow end of the wedge-shaped part for applying a force thereon for pressing this part in the direction of said introduction.

6. A device according to claim 5, **characterized in that** said means comprises a threaded bore (30) in the wedge-shaped part (21) extending in the longitudinal direction thereof from said most narrow end and a threaded male member (32) introducible into the bore and through a spacer (31) having a fixed minimum distance of a head (33) or the like thereof to one of said lug portions (9) so as to force the wedge-shaped part further through the openings when tightening the threaded male member.

7. A device according to claim 5 or 6, **characterized in that** the tool (20) further comprises a member to be engaged with a thicker end (36) of the wedge-shaped part (21) not possible to be brought through the openings of the lug portions so as to apply forces on the wedge-shaped part in the opposite direction to the direction of introduction and by that press said surrounding surfaces (13, 19) of the two lug portions to bear against each other.

8. A device according to claim 7, **characterized in that** the wedge-shaped part (21) has a threaded bore (30) extending substantially in the longitudinal direction thereof and opening in said thicker end (36), and that said member comprises a threaded male member (35) introducible into the bore and through a spacer (34) having a fixed minimum distance of a head (37) or the like thereof to one of said lug portions so as to act upon the wedge-shaped part in the direction out of the openings and by that press said surrounding surfaces (13, 19) of the lug portions against each other.

9. A device according to any of claims 4-8, **characterized in that** the tool has a wedge-shaped part (21) to be introduced through the two openings (11, 12) of two adjacent lug portions in the direction of the most narrow end thereof, and that the wedge-shaped part has a substantially rectangular cross-section as seen in the direction of the introduction intended.

10. A device according to claim 9, **characterized in that** two adjacent sides (22, 23) of the wedge-shaped part converges towards the respective opposite side in the direction towards the most narrow end of said part, while the two other adjacent sides (24 ,25) thereof extend substantially in parallel with said direction, and that delimiting surfaces of each opening in said lug portions are correspondingly inclined for tightly bearing against the two sides first mentioned of the wedge-shaped part thereagainst.

11. A device according to any of the preceding claims, **characterized in that** it has means (20') adapted to fix the two articles with respect to each other on a location at a distance from said tool (20) for preventing the articles held together to rotate about said tool.

12. A device according to claim 11, **characterized in that** said fixing means comprises a further said tool (20') adapted to co-operate in the same way as the tool first mentioned with lug portions and openings of the articles on said location.

13. A method for releasably securing two articles in a mutually fixed position to each other, whereby it is carried out for securing articles in the form of machine articles and **characterized in that**
a) a second (2) of the articles is moved with a second lug portion (6) projecting therefrom and provided with an opening (12) through a first opening (5) of a first article (1) also provided with a lug portion (9) having an opening (11), so that the openings of said lug portions are at least partially overlapping, said opening of at least one of the lug portions being surroundingly limited by lug portion walls,
the respective lug portion opening being designed to have at least two surfaces (15, 17) defining it in alignment with corresponding surfaces (16, 18) defining the lug portion opening of the adjacent lug portion for defining said fixed position with respect to two dimensions and the first lug portion having surfaces (13) surrounding said opening adapted to define said fixed position with respect to a third dimension by bearing against corresponding surfaces (19) of the second lug portion, and
b) introducing a tool (20) through the openings of adjacent lug portions and pressing these into alignment of said defining surfaces and said surrounding surfaces to bear under pretension against each other for holding the articles in a mutually fixed position.

14. A method for permanently securing at least two articles to each other, in which the articles are brought into a mutually fixed position and are while holding them in this position permanently secured to each other, **characterized in that** it is carried out for securing articles in the form of machine articles and
a) a second (2) of the articles is moved with a second lug portion (6) projecting therefrom and provided with an opening (12) through a first opening (5) of a first article (1) also provided with a lug portion (9) having an opening (11), so that the openings of said lug portions are at least partially overlapping, said opening of at least one of the lug portions being surroundingly limited by lug portion walls,
the respective lug portion opening being designed to have at least two surfaces (15, 17) defining it in alignment with corresponding surfaces (16, 18) defining the lug portion opening of the adjacent lug portion for defining said fixed position with respect to two dimensions and the first lug portion having surfaces (13) surrounding said opening adapted to define said fixed position with respect to a third dimension by bearing against corresponding surfaces (19) of the second lug portion,
b) introducing a tool (20) through the openings of adjacent lug portions and pressing these into alignment of said defining surfaces and said surrounding surfaces to bear under pretension against each other for holding the articles in a mutually fixed position, and
c) the articles are then in this fixed position permanently secured to each other, for example by riveting.

15. A method according to claim 14, **characterized in that** while holding the articles together in said mutually fixed position material removing machining of the articles is carried out, such as drilling and broaching, and that the articles are thereafter permanently secured to each other while maintaining them in said mutually fixed position.

16. A method according to any of claims 13-15, **characterized in that** in step b) a tool (20) having a wedge-shaped part (21) is introduced with the most narrow end (26) of said part first through the two openings of adjacent lug portions, a threaded male member (32) is then introduced into a threaded bore (30) in the most narrow end of said wedge-shaped part from the opposite direction and is tightened with a head (33) or the like thereof against a spacer (31) defining a minimum distance of said head or the like to one of said lug portions so as to pull the wedge-shaped part further through said openings, another threaded male member (35) is after that introduced into a threaded bore (30) in the thicker end (36) of the wedge-shaped part for being tightened with a head (37) or the like thereof against a spacer (34) defining a minimum distance of said head or the like to the other lug portion for acting upon the wedge-shaped part in the direction out of the openings and by that press said surrounding surfaces of the lug portions against each other.

17. A method according to any of claims 13-16, **characterized in that** it is carried out for securing articles of an airplane fuselage in a mutually fixed position.

## Patentansprüche

1. System, das zwei Erzeugnisse und eine Vorrichtung zum lösbaren Zusammenhalten der zwei Erzeugnisse in einer zueinander feststehenden Position umfasst, wobei die Erzeugnisse Maschinenerzeugnisse sind, ein erstes (1) der Erzeugnisse mit wenigstens einer ersten Öffnung (5) versehen ist, das andere, das zweite Erzeugnis (2) mit wenigstens einem zweiten vorstehenden Ansatzabschnitt (6) versehen ist, der dazu bestimmt ist, durch die Öffnung in dem ersten Erzeugnis von einer ersten Seite (8) desselben her bewegt zu werden, **dadurch gekennzeichnet, dass** wenigstens ein erster vorstehende Ansatzabschnitt (9) an der gegenüberliegenden zweiten Seite (10) des ersten Erzeugnisses an die Öffnung angrenzend angeordnet ist, dass die zwei Ansatzabschnitte eine Öffnung (11, 12) haben, die jeweils quer zu der ersten Öffnung in dem ersten Erzeugnis durch sie hindurch verläuft, wenn der zweite Ansatzabschnitt (6) durch diese Öffnung eingeführt wird, dass wenigstens eine der Ansatzabschnittöffnungen umgebend durch Ansatzabschnitt-Wände begrenzt wird, dass die Ansatzabschnitte (6, 9) so eingerichtet sind, dass sie so angeordnet sind, dass sich ihre Öffnungen (11, 12) wenigstens teilweise überlappen, wenn der zweite Absatzabschnitt durch die erste Öffnung eingeführt wird, dass die jeweilige Ansatzabschnitt-Öffnung so gestaltet ist, dass sie wenigstens zwei Flächen (15, 17) hat, die sie in Ausrichtung auf entsprechende Flächen (16, 18) bestimmen, die die Ansatzabschnitt-Öffnung des angrenzenden Ansatzabschnitts bestimmen, um die feststehende Position in Bezug auf die zwei Dimensionen zu bestimmen, und der erste Ansatzabschnitt Flächen (13) hat, die die Öffnung umgeben und so eingerichtet sind, dass sie die feststehende Position in Bezug auf eine dritte Dimension bestimmen, indem sie an entsprechenden Flächen (19) des zweiten Ansatzabschnitts anliegen, und dass sie des Weiteren ein Werkzeug (20) umfasst, das so eingerichtet ist, dass es durch die Öffnungen angrenzender Ansatzabschnitte angeführt wird und sie in Ausrichtung auf die bildenden Flächen und die umgebenden Flächen drückt, um unter Vorspannung aneinander anzuliegen und die Erzeugnisse in einer zueinander feststehenden Position zu halten.

2. Vorrichtung nach Anspruch 1, **dadurch gekennzeichnet, dass** nur einer (6) der zwei Ansatzabschnitte mit begrenzenden Flächen, die in Ausrichtung zu bewegen sind, eine Öffnung aufweist, die umgebend durch Ansatzabschnitt-Wände begrenzt wird und die Öffnung des anderen Ansatzabschnitts (9) in der Richtung von den ersten Erzeugnisse weg in der feststehenden Position seitlich geöffnet und dadurch nutartig ist.

3. Vorrichtung nach Anspruch 2, **dadurch gekennzeichnet, dass** der erste Ansatzabschnitt (9) eine nutartige Öffnung (11) hat.

4. Vorrichtung nach einem der vorangehenden Ansprüche, **dadurch gekennzeichnet, dass** das Werkzeug (20) einen keilartigen Charakter hat, um so durch Keilwirkung das Pressen der begrenzenden Flächen (15-18) in Ausrichtung zueinander in der feststehenden Position zu erreichen.

5. Vorrichtung nach Anspruch 4, **dadurch gekennzeichnet, dass** das Werkzeug (20) einen keilförmigen Teil (21) hat, der so eingerichtet ist, dass das schmalste Ende (26) desselben zuerst durch die Öffnungen aneinander grenzende Ansatzabschnitte eingeführt wird und dass das Werkzeug Einrichtungen (30-32) zum Eingriff mit dem schmalsten Ende des keilförmigen Teils umfasst, um eine Kraft darauf auszuüben und diesen Teil in der Richtung der Einführung zu pressen.

6. Vorrichtung nach Anspruch 5, **dadurch gekennzeichnet, dass** die Einrichtung eine Gewindebohrung (30) in dem keilförmigen Teil (21), die sich in der Längsrichtung desselben von dem schmalsten Ende aus erstreckt, sowie ein mit Gewinde versehenes Einführelement (32) umfasst, das in die Bohrung und durch einen Abstandshalter (31) hindurch eingeführt werden kann, der einen unveränderlichen minimalen Abstand eines Kopfs (33) oder dergleichen zu einem der Ansatzabschnitte (9) hat, um den keilförmigen Teil weiter durch die Öffnungen zu drücken, wenn das mit einem Gewinde versehene Einführelement angezogen wird.

7. Vorrichtung nach Anspruch 5 oder 6, **dadurch gekennzeichnet, dass** das Werkzeug (20) des Weiteren ein Element umfasst, das mit einem dickeren Ende (36) des keilförmigen Teils (21) in Eingriff zu bringen ist, das nicht durch die Öffnungen der Ansatzabschnitte gebracht werden kann, um Kräfte auf den keilförmigen Teil in der der Richtung der Einführung entgegengesetzten Richtung auszuüben und so die umgebenden Flächen (13, 19) der zwei Ansatzabschnitte so zu pressen, dass sie aneinander anliegen.

8. Vorrichtung nach Anspruch 7, **dadurch gekennzeichnet, dass** der keilförmige Teil (21) eine Gewindebohrung (30) hat, die sich im Wesentlichen in der Längsrichtung desselben erstreckt und sich in dem dickeren Ende (36) öffnet und dass das Element ein mit einem Gewinde versehenes Einführelement (35) umfasst, das in die Bohrung und durch einen Abstandshalter (34) hindurch eingeführt werden kann, der einen unveränderlichen minimalen Abstand eines Kopfes (37) oder dergleichen zu einem der Ansatzabschnitte hat, um so auf den keilförmigen Teil in der Richtung aus den Öffnungen heraus einzuwirken und damit die umgebenden Flächen (13, 19) der Ansatzabschnitte aneinander zu pressen.

9. Vorrichtung nach einem der Ansprüche 4-8, **dadurch gekennzeichnet, dass** das Werkzeug einen keilförmigen Teil (21) hat, der durch die zwei Öffnungen (11, 12) von zwei aneinander grenzenden Ansatzabschnitten in der Richtung des schmalsten Endes desselben einzuführen ist und dass der keilförmige Teil einen, in der Richtung der beabsichtigten Einführung gesehen, rechteckigen Querschnitt hat.

10. Vorrichtung nach Anspruch 9, **dadurch gekennzeichnet, dass** zwei aneinander grenzende Seiten (22, 23) des keilförmigen Teils in Richtung der jeweils gegenüberliegenden Seite in der Richtung auf das schmalste Ende des Teils zu zusammenläuft, während die anderen zwei angrenzenden Seiten (24, 25) desselben sich im Wesentlichen parallel zu der Richtung erstrecken, und dass die begrenzenden Flächen jeder Öffnung in den Ansatzabschnitten entsprechend geneigt sind, um eng anliegend an den zwei zuerst genannten Seiten des keilförmigen Teils anzuliegen.

11. Vorrichtung nach einem der vorangehenden Ansprüche, **dadurch gekennzeichnet, dass** sie eine Einrichtung (20') aufweist, die so eingerichtet ist, dass sie die zwei Erzeugnisse in Bezug zueinander an einer Position in einem Abstand zu dem Werkzeug (20) fixiert, um zu verhindern, dass sich die zusammengehaltenen Erzeugnisse um das Werkzeug herum drehen.

12. Vorrichtung nach Anspruch 11, **dadurch gekennzeichnet, dass** die Fixiereinrichtung ein weiteres Werkzeug (20') umfasst, das so eingerichtet ist, das es auf die gleiche Weise wie das erstgenannte Werkzeug mit Ansatzabschnitten und Öffnungen der Erzeugnisse an der Position zusammenwirkt.

13. Verfahren zum lösbaren Befestigen von zwei Erzeugnissen in einer zueinander feststehenden Position aneinander, wobei es zum Befestigen von Erzeugnissen in Form von Maschinenerzeugnissen ausgeführt wird, **dadurch gekennzeichnet, dass**
a) ein zweites (2) der Erzeugnisse mit einem zweiten Ansatzabschnitt (6), der von ihm vorsteht und mit einer Öffnung (12) versehen ist, durch eine erste Öffnung (5) eines ersten Erzeugnisses (1) bewegt wird, das ebenfalls mit einem Ansatzabschnitt (9) mit einer Öffnung (11) versehen ist, so dass die Öffnungen der Ansatzabschnitte einander wenigstens teilweise überlappen, wobei die Öffnung des wenigstens einen der Ansatzabschnitte umgebend durch die Ansatzabschnitte-Wände begrenzt wird,
die jeweilige Ansatzabschnitt-Öffnung so gestaltet ist, dass sie wenigstens zwei Flächen (15, 17) hat, die sie in Ausrichtung auf entsprechende Flächen (16, 18) bestimmen, die die Ansatzabschnitt-Öffnung des angrenzenden Ansatzabschnitts bestimmen, um die feststehende Position in Bezug auf zwei Dimensionen zu definieren, und der erste Ansatzabschnitt Flächen (13) hat, die die Öffnung umgeben und so eingerichtet sind, dass sie die feststehende Position in Bezug auf eine dritte Dimension bestimmen, indem sie an entsprechenden Flächen (19) des zweiten Ansatzabschnitts anliegen, und
b) ein Werkzeug (20) durch die Öffnungen aneinander grenzender Ansatzabschnitte eingeführt wird und diese in Ausrichtung auf die bestimmenden Flächen sowie die umgebenden Flächen gepresst werden, um unter Vorspannung aneinander anzuliegen und so die Erzeugnisse in einer zueinander feststehenden Position zu halten.

14. Verfahren zum dauerhaften Befestigen wenigstens zweier Erzeugnisse aneinander, wobei die Erzeugnisse in eine vorhandene feststehende Position gebracht werden und, während sie in dieser Position gehalten werden, dauerhaft aneinander befestigt werden, **dadurch gekennzeichnet, dass** es zum Befestigen von Erzeugnissen in der Form von Maschinenerzeugnissen ausgeführt wird, und
a) ein zweites (2) der Erzeugnisse mit einem zweiten Ansatzabschnitt (6), der von ihm vorsteht und mit einer Öffnung (12) versehen ist, durch eine erste Öffnung (5) eines ersten Erzeugnisses (1) bewegt wird, das ebenfalls mit einem Ansatzabschnitt (9) mit einer Öffnung (11) versehen ist, so dass die Öffnungen der Ansatzabschnitte einander wenigstens teilweise überlappen, wobei die Öffnung wenigstens eines der Ansatzabschnitte umgebend durch Ansatzabschnitt-Wände begrenzt wird,
die jeweilige Ansatzabschnitts-Öffnung so gestaltet ist, dass sie wenigstens zwei Flächen (15, 17) hat, die sie in Ausrichtung auf entsprechende Flächen (16, 18) bestimmen, die die Ansatzabschnitt-Öffnung des angrenzenden Ansatzabschnitts bestimmen, um die feststehende Position in Bezug auf zwei Dimensionen definieren, und der erste Ansatzabschnitt Flächen (13), die die Öffnung umgeben und so eingerichtet sind, dass sie die feststehende Position in Bezug auf eine dritte Dimension bestimmen, indem sie an entsprechenden Flächen (19) des zweiten Ansatzabschnitts anliegen,
b) ein Werkzeug (20) durch die Öffnungen aneinander grenzender Ansatzabschnitte eingeführt wird und diese in Ausrichtung auf die bestimmenden Flächen sowie die umgebenden Flächen gepresst werden, um unter Vorspannung aneinander anzuliegen und so die Erzeugnisse in einer zueinander feststehenden Position zu halten, und
c) die Erzeugnisse dann in dieser feststehenden Position dauerhaft aneinander befestigt werden, beispielsweise durch Nieten.

15. Verfahren nach Anspruch 14, **dadurch gekennzeichnet, dass**, während die Erzeugnisse in der zueinander feststehenden Position gehalten werden, Materialabnahme Bearbeitung der Erzeugnisse, wie beispielsweise Bohren und Räumen, ausgeführt wird und dass die Erzeugnisse anschließend dauerhaft aneinander befestigt werden, während sie in der zueinander feststehenden Position gehalten werden.

16. Verfahren nach einem der Ansprüche 13-15, **dadurch gekennzeichnet, dass** in Schritt b) ein Werkzeug (20) mit einem keilförmigen Teil (21) mit dem schmalsten Ende (26) des Teils zuerst durch die zwei Öffnungen aneinander grenzender Ansatzabschnitte eingeführt wird, ein mit Gewinde versehenes Einführelement (32) dann in eine Gewindebohrung (30) in dem schmalsten Ende des keilförmigen Teils von der entgegengesetzten Richtung her eingeführt wird und so angezogen wird, dass ein Kopf (33) desselben oder dergleichen an einem Abstandhalter (31) einen minimalen Abstand des Kopfes oder dergleichen zu einem der Ansatzabschnitte bestimmt, um den keilförmigen Teil weiter durch die Öffnungen zu ziehen, ein weiteres mit Gewinde versehenes Einführelement (35) danach in eine Gewindebohrung (30) in dem dickeren Ende (36) des keilförmigen Teils eingeführt wird, um mit einem Kopf (37) desselben oder dergleichen an einem Abstandshalter (34) angezogen zu werden, der einen minimalen Abstand des Kopfes oder dergleichen zu dem anderen Ansatzabschnitt bestimmt, um auf den keilförmigen Teil in der Richtung aus den Öffnungen heraus einzuwirken und damit die umgebenden Flächen der Ansatzabschnitte aneinander zu pressen.

17. Verfahren nach einem der Ansprüche 13-16, **dadurch gekennzeichnet, dass** es zum Befestigen von Erzeugnissen eines Flugzeugrumpfs in einer zueinander feststehenden Position ausgeführt wird.

## Revendications

1. Système comprenant deux pièces et un dispositif pour tenir, de manière détachable, les deux pièces ensemble dans une position mutuellement fixée, dans lequel les pièces sont des pièces de machine, une première (1) desdites pièces est prévue avec au moins une première ouverture (5), l'autre seconde pièce (2) est prévue avec au moins une seconde partie à ergot en saillie (6) conçue pour être déplacée à travers ladite ouverture dans la première pièce depuis un premier côté (8) de celle-là, **caractérisé en ce que** au moins une première partie à ergot en saillie (9) est disposée sur le second côté opposé (10) de la première pièce de façon adjacente à ladite ouverture, que les deux parties à ergot ont une ouverture (11, 12), chacune passant à travers celles-là de manière transversale jusqu'à la première ouverture dans la première pièce lorsque ladite seconde partie à ergot (6) est introduite à travers cette ouverture, qu'au moins l'une des ouvertures de partie à ergot est délimitée tout autour par les parois de la partie à ergot, que les parties à ergot (6, 9) sont disposées pour être situées avec leurs ouvertures (11, 12) qui se chevauchent au moins partiellement lorsque la seconde partie à ergot est introduite à travers ladite première ouverture, que l'ouverture de partie à ergot respective est conçue pour avoir au moins deux surfaces (15, 17) la définissant en alignement avec les surfaces correspondantes (16, 18) définissant l'ouverture de partie à ergot de la partie à ergot adjacente pour définir ladite position fixée par rapport à deux dimensions et la première partie à ergot a des surfaces (13) entourant ladite ouverture adaptées pour définir ladite position fixée par rapport à une troisième dimension en appuyant contre les surfaces correspondances (19) de la seconde partie à ergot et qu'il comprend, en outre, un outil (20) adapté pour être introduit à travers les ouvertures des parties à ergot adjacentes et pour les presser en alignement avec lesdites surfaces de définition et lesdites surfaces environnantes pour qu'elles appuient sous une précontrainte les unes contre les autres afin de maintenir les pièces dans une position mutuellement fixée.

2. Dispositif selon la revendication 1, **caractérisé en ce que** seulement l'une (6) des deux parties à ergot ayant les surfaces de délimitation qui doivent être déplacées en alignement, a une ouverture délimitée tout autour par les parois de la partie à ergot et l'ouverture de l'autre partie à ergot (9) est latéralement ouverte dans la direction loin de ladite première pièce dans ladite position fixée et par cette ouverture semblable à une rainure.

3. Dispositif selon la revendication 2, **caractérisé en ce que** ladite première partie à ergot (9) a une dite ouverture semblable à une rainure (11).

4. Dispositif selon l'une quelconque des revendications précédentes, **caractérisé en ce que** ledit outil (20) a un caractère comme un coin de sorte à obtenir grâce à l'action du coin ladite pression en alignement desdites surfaces de délimitation (15 à 18) les unes par rapport aux autres dans ladite position fixée.

5. Dispositif selon la revendication 4, **caractérisé en ce que** l'outil (20) a une pièce en forme de coin (21) adaptée pour avoir l'extrémité la plus étroite (26) de celle-là introduite en premier lieu à travers les deux ouvertures des parties à ergot adjacentes, et que l'outil comprend un moyen (30 à 32) pour une mise en prise avec l'extrémité la plus étroite de la pièce en forme de coin pour appliquer une force sur celle-là pour presser cette partie dans la direction de ladite introduction.

6. Dispositif selon la revendication 5, **caractérisé en ce que** ledit moyen comprend un alésage fileté (30) dans la pièce en forme de coin (21) s'étendant dans la direction longitudinale de celle-là depuis ladite extrémité la plus étroite et un organe mâle fileté (32) qui peut être introduit dans l'alésage et à travers une pièce d'écartement (31) ayant une distance minimale fixée allant d'une tête (33) ou analogue de celle-là jusqu'à l'une desdites parties à ergot (9) de sorte à forcer davantage la pièce en forme de coin à travers les ouvertures lors du serrage de l'organe mâle fileté.

7. Dispositif selon la revendication 5 ou 6, **caractérisé en ce que** l'outil (20) comprend, en outre, un organe qui doit être mis en prise avec une extrémité plus épaisse (36) de la pièce en forme de coin (21) mais qui n'est pas possible d'être amené à travers les ouvertures des parties à ergot de sorte à appliquer des forces sur la partie à ergot dans la direction opposée à la direction d'introduction et, par cela, à presser les surfaces environnantes (13, 19) des deux parties à ergot pour les porter les unes contre les autres.

8. Dispositif selon la revendication 7, **caractérisé en ce que** la pièce en forme de coin (21) a un alésage fileté (30) s'étendant sensiblement dans la direction longitudinale de celle-là et une ouverture dans ladite extrémité plus épaisse (36), et ce dit organe comprend un organe mâle fileté (35) qui peut être introduit dans l'alésage et à travers une pièce d'écartement (34) ayant une distance minimale fixée allant d'une tête (37) ou analogue de celle-là jusqu'à l'une desdites parties à ergot de sorte à agir sur la pièce en forme de coin dans la direction loin des ouvertures et, par cela, à presser lesdites surfaces environnantes (13, 19) des parties à ergot les unes contre les autres.

9. Dispositif selon l'une quelconque des revendications 4 à 8, **caractérisé en ce que** l'outil a une pièce en forme de coin (21) qui peut être introduite à travers les deux ouvertures (11, 12) des deux parties à ergot adjacentes dans la direction de l'extrémité la plus étroite de celle-là, et que la pièce en forme de coin a une coupe transversale sensiblement rectangulaire comme vu dans la direction d'introduction prévue.

10. Dispositif selon la revendication 9, **caractérisé en ce que** deux côtés adjacents (22, 23) de la pièce en forme de coin convergent vers le côté opposé respectif dans la direction vers l'extrémité la plus étroite de ladite pièce, tandis que les deux autres côtés adjacents (24, 25) de celle-là s'étendent sensiblement en parallèle avec ladite direction, et que les surfaces de délimitation de chaque ouverture dans lesdites parties à ergot sont inclinées de manière correspondante pour appuyer fermement contre les deux côtés mentionnés au début de la pièce en forme de coin.

11. Dispositif selon l'une quelconque des revendications précédentes, **caractérisé en ce qu'**il a un moyen (20') adapté pour fixer les deux pièces l'une par rapport à l'autre sur un emplacement à une distance dudit outil (20) pour empêcher que les pièces maintenus ensemble ne tournent autour dudit outil.

12. Dispositif selon la revendication 11, **caractérisé en ce que** ledit moyen de fixation comprend un autre dit outil (20') adapté pour coopérer de la même manière que l'outil mentionné au début avec les parties à ergot et les ouvertures des pièces sur ledit emplacement.

13. Procédé pour fixer, de manière détachable, deux pièces l'une à l'autre dans une position mutuellement fixée, de sorte qu'il est effectué pour attacher des pièces sous la forme de pièces de machine et **caractérisé en ce que**
a) une seconde (2) des pièces est déplacée avec une seconde partie à ergot (6) faisant saillie de celle-là et pourvue d'une ouverture (12) à travers une première ouverture (5) d'une première pièce (1) également prévue avec une partie à ergot (9) ayant une ouverture (11) de telle sorte que les ouvertures desdites parties à ergot se chevauchent au moins partiellement, ladite ouverture d'au moins l'une des parties à ergot étant limitées tout autour par les parois de la partie à ergot,
l'ouverture de partie à ergot respective étant conçue pour avoir au moins deux surfaces (15, 17) la définissant en alignement avec les surfaces correspondantes (16, 18) définissant l'ouverture de partie à ergot de la partie à ergot adjacente pour définir ladite position fixée par rapport à deux dimensions et la première partie à ergot ayant des surfaces (13) entourant ladite ouverture adaptées pour définir ladite position fixée par rapport à une troisième dimension en appuyant contre les surfaces correspondances (19) de la seconde partie à ergot, et
b) l'introduction d'un outil (20) à travers les ouvertures des parties à ergot adjacentes et le fait de presser celles-là en alignement avec lesdites surfaces de définition et lesdites surfaces environnantes pour qu'elles appuient sous une précontrainte les unes contre les autres afin de maintenir les pièces dans une position mutuellement fixée.

14. Procédé pour fixer, de manière permanente, au moins deux pièces l'une à l'autre, dans lequel les pièces sont mises dans une position mutuellement fixée et, tout en les maintenant dans cette position, sont fixées de manière permanente l'une à l'autre, **caractérisé en ce qu'**il est effectué pour fixer des pièces sous la forme de pièces de machine et
a) une seconde (2) des pièces est déplacée avec une seconde partie à ergot (6) faisant saillie de celle-là et pourvue d'une ouverture (12) à travers une première ouverture (5) d'une première pièce (1) également prévue avec une partie à ergot (9) ayant une ouverture (11) de telle sorte que les ouvertures desdites parties à ergot se chevauchent au moins partiellement, ladite ouverture d'au moins l'une des parties à ergot étant limitées tout autour par les parois de la partie à ergot,
l'ouverture de partie à ergot respective étant conçue pour avoir au moins deux surfaces (15, 17) la définissant en alignement avec les surfaces correspondantes (16, 18) définissant l'ouverture de partie à ergot de la partie à ergot adjacente pour définir ladite position fixée par rapport à deux dimensions et la première partie à ergot ayant des surfaces (13) entourant ladite ouverture adaptées pour définir ladite position fixée par rapport à une troisième dimension en appuyant contre les surfaces correspondances (19) de la seconde partie à ergot,
b) l'introduction d'un outil (20) à travers les ouvertures des parties à ergot adjacentes et le fait de presser celles-là en alignement avec lesdites surfaces de définition et lesdites surfaces environnantes pour qu'elles appuient sous une précontrainte les unes contre les autres afin de maintenir les pièces dans une position mutuellement fixée, et
c) les pièces sont ensuite attachées, dans cette position fixée, l'une à l'autre de manière permanente, par exemple par rivetage.

15. Procédé selon la revendication 14, **caractérisé en ce que**, tout en maintenant les pièces ensemble dans ladite position mutuellement fixée, un usinage d'enlèvement de matière des pièces est effectué, tel qu'un perçage et un brochage, et que les pièces sont, par la suite, fixées, de manière permanente, l'une à l'autre tout en les maintenant dans ladite position mutuellement fixée.

16. Procédé selon l'une quelconque des revendications 13 à 15, **caractérisé en ce que**, à l'étape b), un outil (20) ayant une pièce en forme de coin (21) est d'abord introduit avec l'extrémité la plus étroite (26) de ladite pièce à travers les deux ouvertures des parties à ergot adjacentes, un organe mâle fileté (32) est ensuite introduit dans un alésage fileté (30) dans l'extrémité la plus étroite de ladite pièce en forme de coin depuis la direction opposée et est serré avec une tête (33), ou analogue, de celle-là contre une pièce d'écartement (31) définissant une distance minimale allant de ladite tête, ou analogue, jusqu'à l'une desdites parties à ergot de sorte à tirer davantage la pièce en forme de coin à travers lesdites ouvertures, un autre organe mâle fileté (30) est, après cela, introduit dans un alésage fileté (30) dans l'extrémité plus épaisse (36) de la pièce en forme de coin pour être serré avec une tête (37), ou analogue, de celle-là contre une pièce d'écartement (34) définissant une distance minimale allant de ladite tête, ou analogue, jusqu'à l'autre partie à ergot pour agir sur la pièce en forme en coin dans la direction loin des ouvertures et, par cela, pour presser lesdites surfaces environnantes des parties à ergot les unes contre les autres.

17. Procédé selon l'une quelconque des revendications 13 à 16, **caractérisé en ce qu'**il est effectué pour fixer des pièces d'un fuselage d'avion dans une position mutuellement fixée.
